# EUROPEAN PATENT SPECIFICATION

(11) **EP 2 890 633 B1**
(45) Date of publication and mention of the grant of the patent: **17.11.2021**
(21) Application number: 13756456.3
(22) Date of filing: 30.08.2013
(51) Int. Cl.: C01B 32/19, B82Y 30/00, B82Y 40/00

(54) **NANOSTRUCTURED CARBON-BASED MATERIAL**
NANOSTRUKTURIERTES MATERIAL AUF KOHLENSTOFFBASIS
MATÉRIAU À BASE DE CARBONE NANOSTRUCTURÉ

(30) Priority: 29.08.2012 IT BO20120454
(43) Date of publication of application: 08.07.2015
(73) Proprietor: GRAPHENE-XT S.r.l., 40123 Bologna (IT)
(72) Inventor: LIGI, Simone, 40033 Casalecchio Di Reno (IT)
(74) Representative: Modiano, Micaela Nadia
(86) International application number: PCT/EP2013/068021
(87) International publication number: WO 2014/033274

(56) References cited:
- US-A1- 2008 279 756
- KNIEKE C ET AL: "Scalable production of graphene sheets by mechanical delamination", CARBON, ELSEVIER, OXFORD, GB, vol. 48, no. 11, 12 May 2010 (2010-05-12), pages 3196-3204, XP027093623, ISSN: 0008-6223 [retrieved on 2010-05-12]
- BOURLINOS A B ET AL: "Aqueous-phase exfoliation of graphite in the presence of polyvinylpyrrolidone for the production of water-soluble graphenes", SOLID STATE COMMUNICATIONS, PERGAMON, GB, vol. 149, no. 47-48, 22 September 2009 (2009-09-22), pages 2172-2176, XP026705717, ISSN: 0038-1098, DOI: 10.1016/J.SSC.2009.09.018 [retrieved on 2009-09-22]
- JONATHAN N COLEMAN: "Liquid Exfoliation of Defect-Free Graphene", ACCOUNTS OF CHEMICAL RESEARCH, vol. 46, no. 1, 20 March 2012 (2012-03-20) , pages 14-22, XP055062089, ISSN: 0001-4842, DOI: 10.1021/ar300009f
- MUSTAFA LOTYA ET AL: "Liquid Phase Production of Graphene by Exfoliation of Graphite in Surfactant/Water Solutions", JOURNAL OF THE AMERICAN CHEMICAL SOCIETY, vol. 131, no. 10, 18 March 2009 (2009-03-18), pages 3611-3620, XP055062091, ISSN: 0002-7863, DOI: 10.1021/ja807449u
- None

## Description

Since its discovery in 2004 by Novoselov and Geim (Novoselov, K.S. et al., "Electric field effect in atomically thin carbon films" - Science 306, 666-669 (2004)), graphene has attracted enormous interest of the world of academic and industrial research due to its unique characteristics:
- 200 times stronger than steel (Lee, C. et al. (2008) - "Measurement of the Elastic Properties and Intrinsic Strength of Monolayer Graphene". Science 321 (5887): 385);
- 10 times higher carrier mobility than silicon (Nature Materials 6, 183 - 191 (2007); "The rise of graphene", A. K. Geim & K.S. Novoselov);
- optically transparent, flexible, originating from carbon-based low-cost raw materials. Graphene is a monoatomic layer of sp2-hybridized carbon atoms; it can also be described as a sheet of many benzene rings joined to each other to form a planar structure. Graphene is the fundamental unit of graphite, which is formed by the stacking of many layers of graphene held together by van der Waals interactions. Until it was discovered, it was thought that a single isolated graphene sheet could not be stable. Now, this material on its own could:
- solve dimensional limitations in the production of microprocessors;
- obviate the use of expensive indium-tin oxide (ITO) for conductive transparent materials;
- produce flexible and transparent conductive materials;
- develop high-efficiency photovoltaic technologies;
- store large amounts of energy in small dimensions.

While research is extending the possible fields of use of graphene to the most disparate sectors, true industrial expansion will be possible only if the technological problems linked to the mass production of this new material are solved.

There are various technologies for manufacturing graphene, which can be summarized into three main groups:
i) mechanical exfoliation;
ii) chemical exfoliation;
iii) atomic growth.

Within these groups there are many variations used more or less in practice to market graphene.
i) Mechanical exfoliation through scotch tape, the method used by Nobel Prize laureates Novoselov and Geim for their discovery, is still the best technology for obtaining graphene of extremely high purity and quality, i.e., pristine graphene.

Unfortunately, with this method it is possible to produce only a small number of graphene sheets, on silicon or silicon oxide, that generally have dimensions of less than 2000 square microns; this, due to the costs that it entails, restricts the field of application to scientific research only (see http://www.grapheneindustries.com/) .

The target of manufacturers of graphene by mechanical milling, often obtained by means of ball mills, of various raw materials, graphite, bituminous pitches and carbon products of various kinds, is different. These products can reach relatively low prices, down to a few hundred dollars per kilogram, but it is questionable whether they can be termed graphene. The composition of these materials, in terms of sheet thickness, rarely has a significant single-layer component: more commonly, these are materials with distributions up to 10 layers of graphene, and the lateral dimensions for the lowest thicknesses do not exceed one micron.
ii) Chemical exfoliation utilizes the structure of graphite, which naturally has graphene layers mutually bonded by forces that are weaker than those acting along the plane; this difference in bond strengths allows, by the use of various chemical compounds, the mutual separation of one or more layers while keeping intact the planar structure of graphene.

Chemical exfoliation can be divided into two additional groups:
ii.a) exfoliation that keeps the properties of graphene relatively unchanged; or
ii.b) exfoliation that modifies these properties significantly. In this last case, one speaks of *Chemically Modified Graphene* (CMG).
ii.a) Among the methods that keep the properties of graphene relatively unchanged there is exfoliation with solvents, such as for example n-methylpyrrolidone (NMP), dimetylformamide (DMF), etcetera; with these products and with the aid of the sonication process it is possible to obtain lateral dimensions in the order of microns for significant percentages of monolayer material.

The disadvantage is that this type of solvents is difficult to remove from the graphene surface.

Another method is exfoliation by intercalation of chemical compounds and subsequent thermal expansion of the intercalated graphite. The final mechanical treatment generates the graphene powder. This method, therefore, combines the advantages of chemical exfoliation and of mechanical action. In this case, one obtains larger lateral dimensions than with mechanical exfoliation, but the technology is more complex and it is not very clear whether the properties of the graphene remain unchanged.

ii.b) Among CMG production methods, one method that leads to considerable lateral dimensions, up to 300 microns, with almost all the material in the monolayer structure, is the Hummers exfoliation method with some of its variations. Unfortunately, the result of this process is not graphene, but its oxidized form, graphene oxide (GO); this material, while maintaining good mechanical properties, loses completely its electrical properties and becomes fully insulating.

Graphene oxide reduction by thermal or chemical means is used extensively for restoring to the product the original characteristics of graphene, but unfortunately no reduction, so far, has led to results comparable to those of pristine graphene; accordingly, graphene reduction products are correctly termed *Reduced Graphene Oxide* (RGO).

There are also other variations to the Hummers oxidation method, for example oxidation with peroxides, electrochemical oxidation, high-temperature oxidation, etcetera; however, they all produce an insulating graphene oxide.

Other methods for the production of chemical graphene derivatives (CMG) that do not entail graphite oxidation in any case lead to a modification or impairment of the characteristics of the graphene. Exfoliation with soaps such as sodium cholate, sodium dodecylbenzene sulfonate and Tween 20, lead to products with significant yields of material in monolayer and with lateral dimensions in the order of microns, but unfortunately these soaps are difficult to remove from the material, thus impairing its electrical properties.

Exfoliations with other compounds that bond covalently with graphene, such as ionic liquids, polymers, etcetera, lead to very similar results.
iii) The third group of methods for producing graphene is the one that uses atomic growth to build the structure of perfectly monolayer graphene.

In this group, certainly the best-known method is Chemical Vapor Deposition (CVD) (Bae et al. 2010, Nature Nanotechnology 5, 574-578; "Roll-to-roll production of 30-inch graphene films for transparent electrodes"), which for example Samsung is industrializing for the manufacture of transparent conductive displays as a replacement for the increasingly expensive ITO.

With this method it is possible to manufacture continuous graphene films supported on transparent plastic films that are almost one meter wide and have electrical properties similar to those of pristine graphene.

Another promising method for the atomic construction of graphene is the reduction of silicon carbide (SiC) at high temperature >1100°C; with this method it is possible to produce graphene with relatively large dimensions, but the quality of the finished product is lower than that of CVD graphene.

Variations to the method described above, with comparable performance, provide for the use of other materials or metals as a replacement for silicon.

Currently, CVD technology seems to be the only one capable of mass-producing good-quality graphene, but although costs have been reduced they remain relatively high for many applications. Moreover, these methods can provide only layers of graphene supported on wafers, therefore having a small mass, and this limits their use mainly to the field of electronics. There is instead the need, and the strong market demand, for a product that can be used easily on the scale of one kilogram or even one ton as an additive in various industrial fields: plastic products, ceramic products, conductive inks, liquid solutions for drilling or even biological materials. Exfoliation in solution might be the best approach, but the technologies used so far do not appear to meet this market demand.

US7824651B2 discloses a method of exfoliating a layered material (e.g., graphite and graphite oxide) to produce nano-scaled platelets having a thickness smaller than 100 nm, typically smaller than 10 nm. The method comprises (a) dispersing particles of graphite, graphite oxide, or a non-graphite laminar compound in a liquid medium containing therein a surfactant or dispersing agent, such as Triton X-100, to obtain a stable suspension or slurry; and (b) exposing the suspension or slurry to ultasonic waves.

The aim of the present invention is to provide a method for the production of a nanostructured carbon-based material, particularly a material comprising graphene, that can be applied on a large scale and makes it possible to obtain high yields of the product and high quality of the product in terms, for example, of high length/thickness ratio and high electrical conductivity.

This aim and other objects which will become more apparent from the description that follows are achieved by the production method according to the present claim 1.

An aspect of the present invention relates to a nanostructured carbon-based material obtained by the method according to the present invention, in particular said material comprising graphene.

Another aspect of the present invention relates to the use of a nanostructured carbon-based material obtained by the method according to the present invention, in particular said material comprising graphene, for the production of conductive inks, conductive films, additives for plastic materials, sensors for detecting chemical substances both in a gas and in a liquid, transistors, diodes, optical modulators, transparent conductive materials, solar cells, batteries, ultracapacitors, support for medical or biomedical active ingredients, antibacterial, support capable of differentiating the molecular growth of some cells, protective coatings, flexible electronics, composites or fillers for composites.

In the present description, as already described above, the term *"graphene"* designates a compound having a planar structure and based on carbon with sp2-hybridized atoms. Graphene is a single layer of the structure of graphite; however, the common definition of graphene also includes materials having a planar structure with more than one layer. Some researchers term graphene the material with graphitic structure having fewer than 10 monoatomic layers; in the present invention, the definition of graphene is limited to materials which, in addition to having fewer than 10 monoatomic layers, have a length-thickness ratio of the various layers of more than 10.

In the present description, the term "exfoliating agent" is used to refer to a substance that allows or facilitates the separation of more or less thick layers of the laminar structure of graphite.

In the present description, the term "dispersion" is used to refer to a system on which one phase is dispersed in another prevalent phase having a different composition or physical state.

In the present description, the term "suspension" is used to refer to a mixture in which a solid particulate material is dispersed, but not dissolved, in another liquid material, where the particles that constitute the particulate material have dimensions of more than 1000 nm.

In the present description, the term "nanostructured material" is used to refer to a material having a crystalline structure with at least one dimension measuring less than 100 nanometers.

In a first aspect, the present invention relates to a method for producing a nanostructured carbon-based material, wherein said method comprises the steps of:
i) preparing a suspension by mixing
   - a carbon compound selected from the group consisting of graphite and graphitic materials
      with
   - exfoliating agents, wherein said exfoliating agents are pure or in solution,
      wherein
   - said carbon compound is present in a percentage comprised in the range from 0.5-80% by weight of the total weight;
   - said exfoliating agents, if in solution, are present in the solution of exfoliating agent a percentage of more than 0.001 by weight of the total weight of the solution;
   wherein said exfoliating agents are constituted by oligomers or polymers comprising 1 to 1000 repeating units, preferably 3 to 20 repeating units, said repeating units comprising
   - at least one ether group, preferably at least one ethoxy group; and
   - at least one benzene substituted by:
      - said at least one ether group; and by
      - one or more functional groups selectedfrom the group consisting of: aromatic amines, aramids (aromatic amides), aromatic imines, aromatic imides, aromatic sulfides, aromatic phosphorus compounds, aromatic carboxylic compoyunds, variously substituted phenols, aromatic alcohols, aromatic ethers, aromatic aldehydes, aromatic esters, aromatic anhydrides, nitroaromatic groups, the pyridine group, the pyrimidine group, the imidazole group, azobenzene, anthracenes, diphenyls, aromatic halides, alkane with one or more aromatic groups present in the chain, alkenes with one or more aromatic groups present in the chain, dienes with one or more aromatic groups present in the chain, or mixtures thereof;
         and
ii) sonicating the suspension obtained in step i)
   and/or
   performing mechanical milling of the suspension obtained in step i).

A dispersion is obtained in this manner.

Even more preferably, said one or more functional groups are selected from the group consisting of: nitroaromatics, pyridine, pyrimidine, imidazole, azobenzene, naphthenes, anthracenes, diphenyls, alkane with one or more aromatic groups present in the chain, alkenes with one or more aromatic groups present in the chain, styrenes, dienes with one or more aromatic groups present in the chain, or mixtures thereof.

Preferably, step i) occurs at a temperature comprised in the range from 3 to 80°C.

Preferably, step i) occurs for a time comprised between 10 seconds and 2 minutes.

Preferably, said ether group is selected from the group consisting of: oxirane, ethoxy, acetal.

Preferably, said aromatic group is an optionally substituted benzene group.

Preferably, said exfoliating agents are phenyl ethoxylates substituted by one or more functional groups selected from the group consisting of: aromatic amines, aramids (aromatic amides), aromatic imines, aromatic imides, aromatic sulfides, aromatic phosphorus compounds, aromatic carboxylic compounds, variously substituted phenols, aromatic alcohols, aromatic ethers, aromatic aldehydes, aromatic esters, aromatic anhydrides, nitroaromatic groups, the pyridine group, the pyrimidine group, the imidazole group, azobenzene, anthracenes, diphenyls, aromatic halides, alkane with one or more aromatic groups present in the chain, alkenes with one or more aromatic groups present in the chain, dienes with one or more aromatic groups present in the chain, or mixtures thereof, optionally in a mixture in solution with octyl phenyl ethoxylate or with nonyl phenyl ethoxylate.

The carbon materials can be graphite, in the numerous forms known commercially, among which the following are mentioned merely by way of example: graphite, expanded graphite, pyrolytic graphite (TPG), (HOPG: Highly ordered pyrolytic graphite), synthetic graphite, semicrystalline graphite, and others, as well as other graphite materials, among which finely divided graphite or finely divided variously oxidized graphite, sometimes termed graphene and graphene oxide, respectively, are mentioned merely by way of example.

The exfoliation performed in the present invention leads to the forming of a product which, due to its chemical and physical characteristics, can be said to be rich in monolayer graphene.

The categories of compounds such as soaps, surfactants and similar products are often considered less than optimum because they bond stably with graphene (WO2011014347; M. Pasquali et al., Nature Nanotechnology 5, 406-411(2010), Spontaneous high-concentration dispersions and liquid crystals of graphene; Li et al., Advanced Materials 20, 18, 3557-3561, (2008), Mechanically Strong, Electrically Conductive, and Biocompatible Graphene Paper D).

With the method described herein it is possible to produce large quantities of graphene with a lateral dimension in the order of microns and with high percentages of monolayer product. This material can boast better electrical properties than materials produced with similar chemical exfoliations described so far in the literature (J. Coleman, Adv. Funct. Mater. 2009(19), 3680-3695, Liquid-Phase Exfoliation of Nanotubes and Graphene; J. Coleman et al., J. Am. Chem. Soc. 2009, 131, 3611-3620, Liquid Phase Production of Graphene by Exfoliation of Graphite in Surfactant/Water Solutions; J Coleman et al., ACS Nano 4, 6, 3155-3162 (2010), High-Concentration, Surfactant-Stabilized Graphene Dispersions).

Said exfoliating agents can be used
- pure
or
- diluted in various solvents or mixtures of solvents;
where for example said various solvents or mixtures of solvents are selected from the group consisting of: water, alcohol (such as methanol, propanol), glycols, acetone, methyl ethyl ketone, tetrahydrofuran, chloroform and mixtures thereof. Said solution of exfoliating agents has a concentration of more than 0.001% by weight of the total weight.

It has been found that even highly diluted solutions of the exfoliating agents lead to good results.

Said exfoliating agents are mixed with the material to be exfoliated, where the mixing time can vary from a few seconds to several days, preferably from 10 seconds to 2 minutes; at the industrial level it is preferable to use short time periods, which in any case ensure excellent results. The suspension thus obtained can be preferably sonicated under agitation at various temperatures from -10 to 200°C, depending on the type and concentration of exfoliating substance used. It is possible to obtain dispersions of graphene material even at ambient temperature. The sonication power levels can range from 20 to 500 W with peak power levels of up to 2000 W.

The sonication frequencies can vary from 10 to 300 kHz.

Preferably, the mechanical milling according to the method of the present invention occurs by a method selected from the group consisting of milling with ball mills, roller mills, rotary mills, hammer mills, pin crushers, impact mills, swing-hammer mills, crushers, or rubbing on a belt.

The treatment time of the suspension varies depending on the desired product:
- time periods longer than one day, for example 72 and 580 hours, which lead to a highly concentrated dispersion but with a small lateral dimension of the sheets;
- short time periods, for example in the range between 20 and 360 minutes, which lead to a lower concentration but to a better width/thickness ratio.

The resulting dispersion can be used without further treatment, in view of the excellent electrical properties of the product that remains dispersed therein, or can undergo subsequent treatments depending on the desired type of final use. In fact, the method according to the present invention can further comprise the step of:
iii) separation of the product obtained from said step ii) by: extraction with solvents;
   or
filtration followed by washing with solvents of the dispersion of step ii);
   or
centrifugation of the dispersion of step ii) and washing with a solvent selected from the group consisting of: water, glycols, alcohols, ketones;
   or
injection under pressure;
   or
evaporation of the solution of exfoliating agents of step ii) (wherein said steps of separation, filtration, centrifugation, injection under pressure are methods commonly known in the background art).

As mentioned above, it is possible to perform filtration and then washing with various solvents; merely by way of example, said solvents are selected from the group consisting of: water, acetone, ethanol and isopropanol. This allows easy removal of the compounds used for solid exfoliation and renders the product highly conductive. Centrifugation can be performed to remove the supernatant, followed by washing with various solvents, or one can proceed directly with the process for extraction with solvents.

The solid can be separated also by evaporation of the solution of exfoliating agents. Industrially, the method that uses an injection system to vaporize the suspension directly on the medium to be treated or on chambers from which the solid is then recovered is particularly useful; these processes can use heating systems or anhydrous gases to improve the process.

The suspension, as is or with the addition of further additives, can be used for inks, for perforation fluids, as a solution for surface treatments by coating, spraying, injection and many other applications.

Moreover, the resulting dispersion, as is or after undergoing additional treatments, can be concentrated by treatment under temperature, as follows. The dispersion is heated to temperatures comprised in the range from 10 to 250°C; this passage leads to the separation of the graphene material from the solution, which can be removed easily. Optionally, in order to obtain a clearer dispersion, the graphene component comprised in said dispersion is separated after settling for a period comprised between 0-72 hours, depending on the exfoliating compound used in said method.

The part of graphene material thus separated can be used as is, since it remains a more or less fluid dispersion, but at a higher concentration. As an alternative, the dispersion thus obtained can be treated with a clean solution of various solvents, including water, mixed by agitation or sonication, and subsequently re-concentrated with the process described above.

With this simple and low-cost method it is possible to remove the exfoliating product from the graphene material and to reach graphene concentrations in the solution that can be 4 orders of magnitude greater than in the initial dispersion; merely by way of example, it is possible to find concentrations of 20-30 mg/ml of graphenic material in aqueous solution.

The advantage of this method is the presence of flexible aromatic groups that allow the interaction with the surface of the layer of material to be exfoliated; the presence of the oligopolymer chain containing an oxygen atom allows an interaction with the solvent that is sufficient to keep the material in suspension but not to compete with the interaction of the hydrophobic part of the molecule.

It is possible to hypothesize that the stabilization action of the polar tail by the solvent, combined with the energy imparted by sonication or mechanical action, causes the layers of material to separate in the points where the aromatic group has bonded. The combined action of multiple aromatic groups leads to an exfoliation by layers rather than to fragmentation into small particles obtained with other materials or ion soaps.

In another aspect, the present invention relates to a nanostructured carbon-based material that can be obtained with the method described herein.

In another aspect, the present invention relates to the use of the nanostructured carbon-based material obtained with the method of the present invention to produce conductive inks, conductive films, additives for plastic materials, sensors for detecting chemical substances both in a gas and in a liquid, transistors, diodes, optical modulators, transparent conductive materials, solar cells, batteries, ultracapacitors, support for medical or biomedical active ingredients, antibacterial, support capable of differentiating the molecular growth of some cells, protective coatings, flexible electronics, composites or fillers for composites.

The exfoliating agents found in the present invention offer
- yields (in terms of graphene material made available); and
- quality (in terms of length/thickness ratio and electrical conductivity)
that are better than those of other substances published in the literature.

Exfoliations with agents that are similar or of the same family have already been published (see:
- US7824651B2;
- Hernandez et al., Nature Nanotechnology 3, 563 - 568 (2008), High-yield production of graphene by liquid-phase exfoliation of graphite;
- Li et al., Nature Nanotechnology 3, 538 - 542 (2008), Highly conducting graphene sheets and Langmuir-Blodgett films);
but no significant difference of these compounds with respect to others or a correlation between aromatic groups and a more or less long chain of an ethoxylate has been found in any of these publications.

All this is evidence of the validity of the method described above; however, different processes might also be involved or present simultaneously.

It is furthermore important to note that some of these substances are used generically as suspension agents of exfoliation products (see WO2011057279 and US20110210282A115); in the present invention, instead, the use of ethoxylates with aromatic groups is necessary in order to improve the exfoliation process.

The nanostructured material obtained with the method of the present invention is a graphene formed by fewer than 10 monoatomic layers and with a length/thickness ratio of over 10 and even greater than 100 and has an electrical conductivity that can exceed 5000 S/m.

One advantage of this process is the use of compounds with multiple aromatic groups that are relatively lipophilic and flexible, bonded to a hydrophilic ethoxylate chain. The hypothesis is that this configuration allows the aromatic groups to have a good and broader interaction with the graphene planes that constitute the graphite material. The hydrophilic part is then able to perform its function of suspension agent, by interaction with the water, without damaging the lipophilic surface interaction. The result is a higher exfoliation quality than with other agents such as solvents or soaps in a general sense.

Merely by way of example, phenyl ethoxylates with multiple aromatic groups, which are relatively flexible, can exfoliate a graphene compound with a percentage yield of graphene that is twice that of a common sodium alkyl sulfate or benzene sulfonate.

### EXAMPLES

Only some examples of the methods described above are presented hereafter. The examples not falling within the scope of the appended claims are given for reference only.

### Example 1.

0.06 grams of graphite in flakes are added with 8 ml of a solution of water with 1% octyl phenol ethoxylate (with n=10); the suspension is agitated and sonicated for 4 hours with a Fisher Scientific FB15047 30 W 37 KHz ultrasound bath at the temperature of 75°C. The dispersion is centrifuged for 30 minutes at 3750 rpm.

### Example 2.

0.06 grams of graphite in flakes are added with of 8 ml of a solution of water with 1% polyaryl phenol ethoxylate (with n=17) and three aryl groups; the suspension is agitated and sonicated for 4 hours with a Stimin ST-2 85 W sonicator at 25 KHz at the temperature of 38°C. The dispersion is centrifuged for 30 minutes at 3750 rpm, the supernatant is separated and 8 ml of polyaryl phenol ethoxylate solution are added to the solid residue. After centrifugation for 30 minutes at 3750 rpm, analysis of the graphene dispersion is performed.

### Example 3.

0.8 g of HOPG are milled for 20 minutes with 2 ml of octyl phenol ethoxylate (with n=10). After centrifugation for 30 minutes at 3750 rpm, the dispersion is analyzed.

### Example 4.

15 g of graphite in flakes are sonicated with 150 ml of a 1% mixture of polyaryl phenol ethoxylate with n=17 and two aryl groups in methanol for 4 hours at a temperature of 59°C. After centrifugation for 30 minutes at 3750 rpm, the dispersion is analyzed.

### Example 5.

10 g graphite in powder form are sonicated with 50 ml of a 1% mixture of polyaryl phenol ethoxylate with n=10 and three nitrogenous aryl groups in water for 4 hours at a temperature of 59°C. After centrifugation for 30 minutes at 3750 rpm, the dispersion is analyzed.

### Example 6.

6 ml of the dispersion of Example 2 are filtered on cellulose acetate filter paper with 0.2 micron size; after washing with 210 ml of water, measurement of surface resistivity is performed.

### Example 7.

2 ml of the dispersion of Example 1 are added, filtered on Teflon (PTFE) filter paper with 0.2 micron size; after washing with 400 ml of water, washing with 200 ml of acetone is performed. Surface resistivity is measured.

### Example 8.

4 ml of the dispersion of Example 4 are treated with 10 ml of cyclohexanone; the aqueous dispersion is separated and filtered with 0.2 µm cellulose acetate filter paper and washed with 200 ml of water.

### Example 9.

4 ml of the dispersion of Example 5 are added, filtered on Teflon (PTFE) filter paper with 0.2 micron size; after washing with 400 ml of water, washing with 200 ml of acetone is performed. Surface resistivity is measured.

The surface resistivity measurements are compared with the other values, as shown in the following Table 1.

**Table 1**

| Example | Surface resistivity (Ω/sq) |
|---|---|
| Ex.6 | 77 |
| Ex.7 | 26 |
| Ex.8 | 13 |
| Ex.9 | 15 |
| Comparative prepared as in Ex. 2 with Na cholate | 1330 |

### Example 10.

The following are presented hereinafter:
a) nonyl phenol ethoxylate 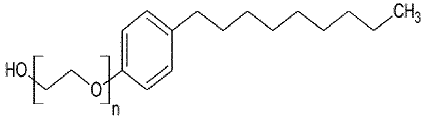
b) octyl phenol ethoxylate 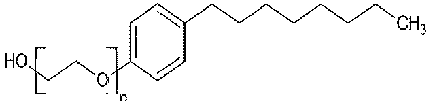
c) di(heptyl benzene) phenol ethoxylate 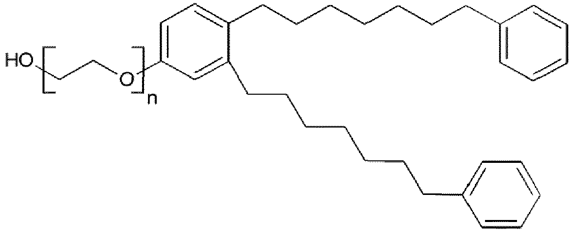
d) 2-butyl pyridine phenol ethoxylate 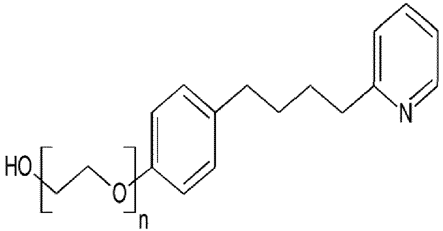
e) benzyl acetyl phenol ethoxylate 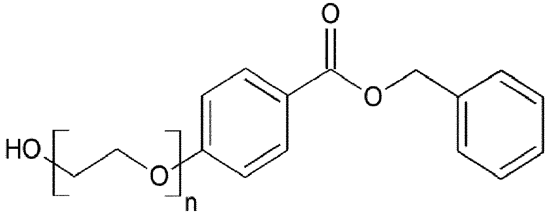
f) phenyl acetyl phenol ethoxylate 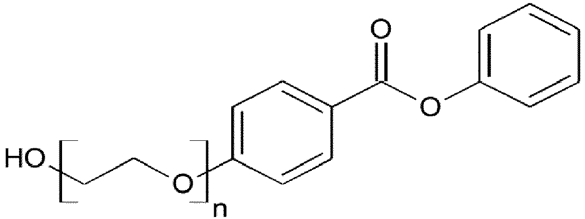
g) benzyl acetyl ethoxylate phenyl ether glycolic acid 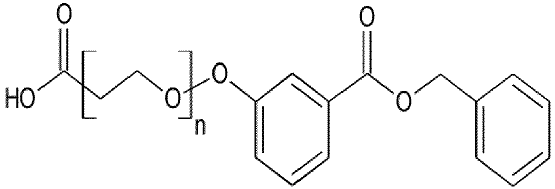
h) pyridine acetyl ethoxylate phenyl ether glycolic acid 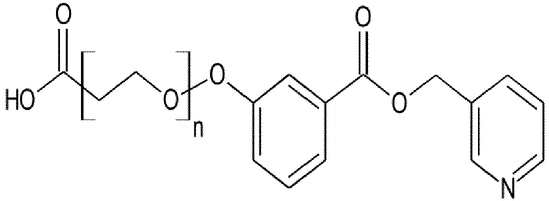
i) pyridine acetyl phenol ethoxylate 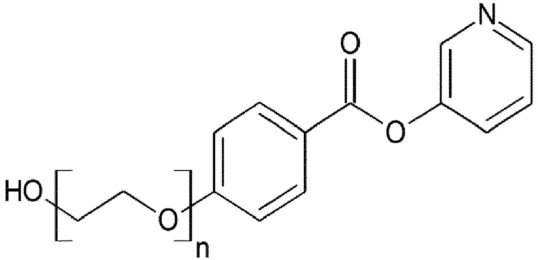
j) tri(2-vinyl pyridine) phenol ethoxylate 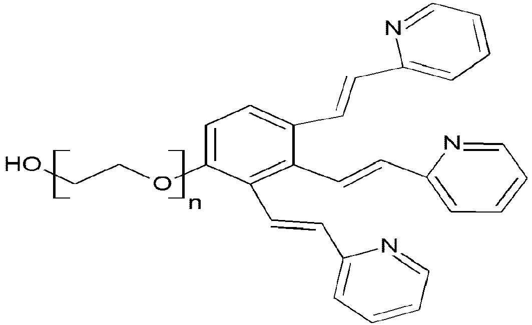
k) 4-(phenyl sulfide)-benzene-1-phenol ethoxylate 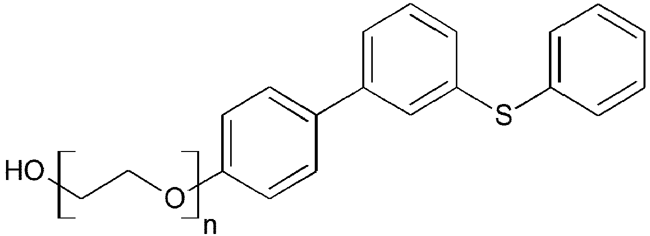
l) sodium decyl sulfate

   CH₃(CH₂)₁₀CH₂OSO₂ONa
m) sodium dodecyl benzene sulfonate

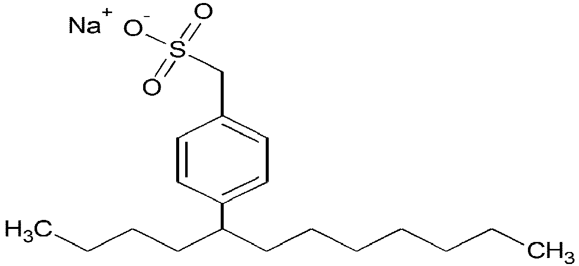

### Example 10.A.

50 g of graphite in powder form, maximum size 120 microns, are mixed at 40°C with 200 ml of a solution of water with 0.1% of compounds a-m for 30 seconds. The mixture is milled for 1 hour in a ball mill at a temperature of 40°C. After centrifugation for 4 minutes at 5400 rpm, analysis of 4 ml of the filtered dispersion is performed.

### Example 10.B.

0.1 grams of graphite in flakes are added with 8 ml of a solution of water with 3% of compounds a-m and are mixed at 60°C for 20 seconds; the suspension is sonicated for 6 hours with a Fisher Scientific FB 15047 30 W 37 KHz ultrasound bath at a temperature of 60°C. The suspension is subjected to centrifugation for 2 minutes at 6500 rpm.

4 ml of each one of the produced dispersions are filtered on Teflon (PTFE) filter paper with 0.2 micron size; after washing with 200 ml of water, washing with 200 ml of ethyl alcohol and 200 ml of acetone is performed.

As can be seen in Table 2, the surface resistivity measured in the graphene produced from compounds such as polyaryl phenol ethoxylates is much lower than the one obtained with ordinary soaps and is an improvement with respect to the family of alkyl phenol ethoxylates.

**Table 2**

| Compound | Surface resistivity (Ω/sq) Example 8.A | Surface resistivity (Ω/sq) Example 8.B |
|---|---|---|
| a) nonyl phenol ethoxylate | 15 | 12 |
| b) octyl phenol ethoxylate | 10 | 14 |
| c) di(heptyl benzene) phenol ethoxylate | 1 | 0.9 |
| d) 2-butyl pyridine phenol ethoxylate | 0.9 | 0.7 |
| e) benzyl acetyl phenol ethoxylate | 3 | 3 |
| f) phenyl acetyl phenol ethoxylate | 2 | 4 |
| g) benzyl acetyl ethoxylate phenyl ether glycolic acid | 52 | 52 |
| h) pyridine acetyl ethoxylate phenyl ether glycolic acid | 52 | 53 |
| i) pyridine acetyl phenol ethoxylate | 3 | 4 |
| j) tri(2-vinyl pyridine) phenol ethoxylate | 0.5 | 1 |
| k) 4-(phenyl sulfide)-benzene- 1 -phenol ethoxylate | 2 | 1 |
| 1) sodium decyl sulfate | insulating | insulating |
| m) sodium dodecyl benzene sulfonate | insulating | insulating |

The examples using compounds a), b), l), m), g) and h) are given for reference.

### Example 11.

The solutions of compounds a, b, c, 1, m are brought to a temperature of 90°C and kept at that temperature for 20 minutes. In solutions a, b, c, a concentrated graphene solution at approximately 19 mg/ml is obtained, whereas solutions 1 and m are not concentrated.

### Example 12.

The solutions of compounds d to k are brought to a temperature of 110°C and kept at that temperature for 5 minutes. The concentrated graphene solutions from examples d, e, f, i, j and k reach a concentration of 30 and 20 mg/ml respectively, whereas 0.2 mg of graphene per ml of solution are obtained from solutions g and h.

## Claims

1. A method for the production of a nanostructured carbon-based material, wherein said method comprises the steps of:
i) preparing a suspension by mixing
- a carbon compound selected from the group consisting of graphite and graphitic materials, with
- exfoliating agents, wherein said exfoliating agents are pure or in solution,
wherein
- said carbon compound is present in a percentage comprised in the range from 0.5-80% by weight of the total weight of said suspension;
- said exfoliating agents, if in solution, are present in the solution of exfoliating agent at a percentage of more than 0.001 by weight of the total weight of the solution;
wherein said exfoliating agents are constituted by oligomers or polymers comprising 1 to 1000 repeating units, preferably 3 to 20 repeating units, comprising
- at least one ether group, preferably at least one ethoxy group; and
- at least one benzene substituted by:
- said at least one ether group; and by
- one or more functional groups selected from the group consisting of: aromatic amines, aramids (aromatic amides), aromatic imines, aromatic imides, aromatic sulfides, aromatic phosphorus compounds, aromatic carboxylic compounds, variously substituted phenols, aromatic alcohols, aromatic ethers, aromatic aldehydes, aromatic esters, aromatic anhydrides, nitroaromatic groups, the pyridine group, the pyrimidine group, the imidazole group, azobenzene, anthracenes, diphenyls, aromatic halides, alkane with one or more aromatic groups present in the chain, alkenes with one or more aromatic groups present in the chain, dienes with one or more aromatic groups present in the chain, or mixtures thereof;
ii) sonicating the suspension obtained in step i)
and/or
performing mechanical milling of the suspension obtained in step i).

2. The method according to one or more of the preceding claims, wherein said mixing occurs at a temperature comprised in the range of 3-80°C, and wherein said mixing occurs for a time comprised between 10 seconds and two minutes.

3. The method according to one or more of the preceding claims, wherein said exfoliating agents are phenyl ethoxylates substituted by one or more functional groups selected from the group consisting of: aromatic amines, aramids (aromatic amides), aromatic imines, aromatic imides, aromatic sulfides, aromatic phosphorus compounds, aromatic carboxylic compounds, variously substituted phenols, aromatic alcohols, aromatic ethers, aromatic aldehydes, aromatic esters, aromatic anhydrides, nitroaromatic groups, the pyridine group, the pyrimidine group, the imidazole group, azobenzene, anthracenes, diphenyls, aromatic halides, alkane with one or more aromatic groups present in the chain, alkenes with one or more aromatic groups present in the chain, dienes with one or more aromatic groups present in the chain, or mixtures thereof, optionally in a mixture in solution with octyl phenyl ethoxylate or with nonyl phenyl ethoxylate.

4. The method according to one or more of the preceding claims, wherein said solution of exfoliating agents comprises a solvent for exfoliating agents selected from the group consisting of: water, alcohol, glycols, acetone, methyl ethyl ketone, tetrahydrofuran, chloroform and mixtures thereof; and wherein said solution of exfoliating agents has a concentration of exfoliating agents greater than 0.001% by weight of the total weight.

5. The method according to one or more of the preceding claims, wherein said mechanical milling occurs by a method selected from the group consisting of milling with ball mills, roller mills, rotary mills, hammer mills, pin crushers, impact mills, swing-hammer mills, planetary mills, crushers or rubbing on a belt.

6. The method according to one or more of the preceding claims, wherein said method further comprises the step of:
iii) separation of the product obtained from step ii) by means of:
extraction with solvents;
or
filtration followed by washing with solvents of the product obtained from step ii);
or
centrifugation of the product obtained from step ii) and washing with a solvent selected from the group consisting of: water, glycols, alcohols, ketones;
or
injection under pressure;
or
evaporation of the solution of exfoliating agents of step ii).

7. The method according to one or more of the preceding claims, wherein said method further comprises the steps of:
a) heating the product obtained in step ii) in a range comprised between 10 and 250°C;
b) settling of said heated product for a period comprised between 0 and 72 hours;
c) separation of settled graphene material from the solution obtained from step b).

8. A nanostructured carbon-based material obtained with the method according to one of the preceding claims.

9. Use of the nanostructured carbon-based material according to claim 8 for producing conductive inks, conductive films, additives for plastic materials, sensors for detecting chemical substances both in a gas and in a liquid, transistors, diodes, optical modulators, transparent conductive materials, solar cells, batteries, ultracapacitors, support for medical or biomedical active ingredients, antibacterial, support capable of differentiating the molecular growth of some cells, protective coatings, flexible electronics, composites or fillers for composites.

## Patentansprüche

1. Ein Verfahren zur Herstellung eines nanostrukturierten Materials auf Kohlenstoffbasis,
wobei das Verfahren folgende Schritte umfasst:
i) das Herstellen einer Suspension durch das Mischen von
- einer Kohlenstoffverbindung, gewählt aus der Gruppe bestehend aus Graphit und graphithaltigen Materialien, mit
- Abblätterungsmitteln, wobei die Abblätterungsmittel rein oder in Lösung vorliegen,
wobei
- die Kohlenstoffverbindung in einem Prozentsatz im Bereich von 0,5-80 Gewichtsprozent des Gesamtgewichts der Suspension vorliegt;
- die Abblätterungsmittel, wenn in Lösung, in der Lösung der Abblätterungsmittel in einem Prozentsatz von mehr als 0,001 Gewichtsprozent des Gesamtgewichts der Lösung vorliegen;
wobei die Abblätterungsmittel aus Oligomeren oder Polymeren bestehen, die 1 bis 1000 Wiederholungseinheiten, vorzugsweise 3 bis 20 Wiederholungseinheiten, umfassen, Folgendes umfassend:
- mindestens eine Ethergruppe, vorzugsweise mindestens eine Ethoxygruppe; und
- mindestens ein Benzol, substituiert mit:
- der mindestens einen Ethergruppe; und mit
- einer oder mehreren Funktionsgruppen, gewählt aus der Gruppe bestehend aus: aromatischen Aminen, Aramiden (aromatischen Amiden), aromatischen Iminen, aromatischen Imiden, aromatischen Sulfiden, aromatischen Phosphorverbindungen, aromatischen Carbonsäureverbindungen, verschieden substituierten Phenolen, aromatischen Alkoholen, aromatischen Ethern, aromatischen Aldehyden, aromatischen Estern, aromatischen Anhydriden, nitroaromatischen Gruppen, der Pyridingruppe, der Pyrimidingruppe, der Imidazolgruppe, Azobenzol, Anthracenen, Diphenylen, aromatischen Halogeniden, Alkan mit einer oder mehreren aromatischen Gruppen in der Kette, Alkenen mit einer oder mehreren aromatischen Gruppen in der Kette, Dienen mit einer oder mehreren aromatischen Gruppen in der Kette oder Mischungen davon;
ii) Beschallen der in Schritt i) gewonnenen Suspension und/oder
mechanisches Zerkleinern der in Schritt i) gewonnenen Suspension.

2. Das Verfahren gemäß einem oder mehreren der obigen Ansprüche, wobei das Mischen bei einer Temperatur im Bereich von 3-80°C und über einen Zeitraum zwischen 10 Sekunden und zwei Minuten stattfindet.

3. Das Verfahren gemäß einem oder mehreren der obigen Ansprüche, wobei die Abblätterungsmittel Phenylethoxylate, substituiert mit einer oder mehreren Funktionsgruppen, sind, gewählt aus der Gruppe bestehend aus: aromatischen Aminen, Aramiden (aromatischen Amiden), aromatischen Iminen, aromatischen Imiden, aromatischen Sulfiden, aromatischen Phosphorverbindungen, aromatischen Carbonsäureverbindungen, verschieden substituierten Phenolen, aromatischen Alkoholen, aromatischen Ethern, aromatischen Aldehyden, aromatischen Estern, aromatischen Anhydriden, nitroaromatischen Gruppen, der Pyridingruppe, der Pyrimidingruppe, der Imidazolgruppe, Azobenzol, Anthracenen, Diphenylen, aromatischen Halogeniden, Alkan mit einer oder mehreren aromatischen Gruppen in der Kette, Alkenen mit einer oder mehreren aromatischen Gruppen in der Kette, Dienen mit einer oder mehreren aromatischen Gruppen in der Kette oder Mischungen davon; wahlweise in einer Mischung in Lösung mit Octylphenylethoxylat oder Nonylphenylethoxylat.

4. Das Verfahren gemäß einem oder mehreren der obigen Ansprüche, wobei die Lösung der Abblätterungsmittel ein Lösungsmittel für Abblätterungsmittel umfasst, das gewählt ist aus der Gruppe bestehend aus: Wasser, Alkohol, Glykolen, Aceton, Methylethylketon, Tetrahydrofuran, Chloroform und Mischungen davon; und wobei die Lösung der Abblätterungsmittel eine Konzentration von Abblätterungsmitteln von mehr als 0,001 Gewichtsprozent des Gesamtgewichts hat.

5. Das Verfahren gemäß einem oder mehreren der obigen Ansprüche, wobei das mechanische Zerkleinern mit Hilfe eines Verfahrens durchgeführt wird, das gewählt ist aus der Gruppe bestehend aus Zerkleinern mit Kugelmühlen, Wälzmühlen, Drehmühlen, Hammermühlen, Nadelmühlen, Feinprallmühlen, Pendelhammermühlen, Planeten-Walzgerüsten, Brechwerken oder Reiben auf einem Band.

6. Das Verfahren gemäß einem oder mehreren der obigen Ansprüche, das weiter folgenden Schritt umfasst:
iii) das Abtrennen des in Schritt ii) gewonnenen Produkts durch:
Extraktion mit Lösungsmitteln;
oder
Filtration, gefolgt von Waschen mit Lösungsmitteln, des in Schritt ii) gewonnenen Produkts;
oder
Zentrifugieren des in Schritt ii) gewonnenen Produkts und Waschen mit einem Lösungsmittel, gewählt aus der Gruppe bestehend aus Wasser, Glykolen, Alkoholen, Ketonen;
oder
Einspritzen unter Druck;
oder
Verdampfen der Lösung von Abblätterungsmitteln aus Schritt ii).

7. Das Verfahren gemäß einem oder mehreren der obigen Ansprüche, das weiter folgende Schritte umfasst:
a) Erhitzen des in Schritt ii) gewonnen Produkts in einem Bereich zwischen 10 und 250°C;
b) Setzenlassen des erhitzten Produkts für einen Zeitraum zwischen 0 und 72 Stunden;
c) Abtrennen des abgesetzten Graphenmaterials aus der in Schritt b) gewonnenen Lösung.

8. Ein nanostrukturiertes Material auf Kohlenstoffbasis, gewonnen mit dem Verfahren gemäß einem der obigen Ansprüche.

9. Verwendung des nanostrukturierten Materials auf Kohlenstoffbasis gemäß Anspruch 8 zur Herstellung von leitfähigen Tinten; leitfähigen Folien; Zusatzstoffen für Kunststoffmaterialien; Sensoren zum Nachweis chemischer Substanzen, sowohl in einem Gas als auch in einer Flüssigkeit; Transistoren; Dioden; optischen Modulatoren; transparenten leitenden Materialien; Solarzellen; Batterien; Ultrakondensatoren; Trägern für medizinisch oder biomedizinisch wirksame Bestandteile; antibakteriell; Trägern, die in der Lage sind, das Molekularwachstum einiger Zellen zu differenzieren; Schutzbeschichtungen; flexibler Elektronik; Verbundstoffen oder Füllstoffen für Verbundstoffe.

## Revendications

1. Procédé pour la production d'un matériau à base de carbone nanostructuré, dans lequel ledit procédé comprend les étapes suivantes :
i) la préparation d'une suspension par le mélange de ce qui suit :
- un composé de carbone sélectionné dans le groupe se composant de graphite et de matériaux graphitiques, et
- des agents exfoliants, dans lequel lesdits agents exfoliants sont purs ou en solution,
dans lequel
- ledit composé de carbone est présent dans un pourcentage compris dans la plage de 0,5 à 80 % en poids du poids total de ladite suspension ;
- lesdits agents exfoliants, si en solution, sont présents dans la solution d'agents exfoliants à un pourcentage de plus de 0,001 % en poids du poids total de la solution ;
dans lequel lesdits agents exfoliants sont constitués d'oligomères ou de polymères comprenant de 1 à 1000 unités répétitives, de préférence de 3 à 20 unités répétitives, comprenant :
- au moins un groupe éther, de préférence au moins un groupe éthoxy ; et
- au moins un benzène substitué par :
- ledit au moins un groupe éther ; et par
- un ou plusieurs groupes fonctionnels sélectionnés dans le groupe se composant de : amines aromatiques, aramides (amides aromatiques), imines aromatiques, imides aromatiques, sulfures aromatiques, composés de phosphore aromatiques, composés carboxyliques aromatiques, phénols substitués de diverses façons, alcools aromatiques, éthers aromatiques, aldéhydes aromatiques, esters aromatiques, anhydrides aromatiques, groupes nitroaromatiques, le groupe pyridine, le groupe pyrimidine, le groupe imidazole, azobenzène, anthracènes, diphényles, halogénures aromatiques, alcane avec un ou plusieurs groupes aromatiques présents dans la chaîne, alcènes avec un ou plusieurs groupes aromatiques présents dans la chaîne, diènes avec un ou plusieurs groupes aromatiques présents dans la chaîne, ou des mélanges de ceux-ci ;
ii) la sonication de la suspension obtenue à l'étape i) et/ou
la réalisation d'un broyage mécanique de la suspension obtenue à l'étape i).

2. Procédé selon la revendication précédente, dans lequel ledit mélange se déroule à une température comprise dans la plage de 3 à 80°C, et dans lequel ledit mélange se déroule pendant une durée comprise entre 10 secondes et deux minutes.

3. Procédé selon une ou plusieurs des revendications précédentes, dans lequel lesdits agents exfoliants sont des éthoxylates phényles substitués par un ou plusieurs groupes fonctionnels sélectionnés dans le groupe se composant de : amines aromatiques, aramides (amides aromatiques), imines aromatiques, imides aromatiques, sulfures aromatiques, composés de phosphore aromatiques, composés carboxyliques aromatiques, phénols substitués de diverses façons, alcools aromatiques, éthers aromatiques, aldéhydes aromatiques, esters aromatiques, anhydrides aromatiques, groupes nitroaromatiques, le groupe pyridine, le groupe pyrimidine, le groupe imidazole, azobenzène, anthracènes, diphényles, halogénures aromatiques, alcane avec un ou plusieurs groupes aromatiques présents dans la chaîne, alcènes avec un ou plusieurs groupes aromatiques présents dans la chaîne, diènes avec un ou plusieurs groupes aromatiques présents dans la chaîne, ou des mélanges de ceux-ci, facultativement dans un mélange en solution avec éthoxylate octyle phényle ou avec éthoxylate nonyle phényle.

4. Procédé selon une ou plusieurs des revendications précédentes, dans lequel ladite solution d'agents exfoliants comprend un solvant pour agents exfoliants sélectionné dans le groupe se composant de : eau, alcool, glycols, acétone, cétone méthyle éthyle, tétrahydrofuran, chloroforme et des mélanges de ceux-ci ; et dans lequel ladite solution d'agents exfoliants a une concentration en agents exfoliants supérieure à 0,001 % en poids du poids total.

5. Procédé selon une ou plusieurs des revendications précédentes, dans lequel ledit broyage mécanique se déroule selon un procédé sélectionné dans le groupe se composant de broyage avec broyeurs à boulets, broyeurs à rouleaux, broyeurs rotatifs, broyeurs à marteaux, concasseurs à broches, broyeurs à percussion, broyeurs pendulaires, broyeurs planétaires, concasseurs ou frottement sur une courroie.

6. Procédé selon une ou plusieurs des revendications précédentes, dans lequel ledit procédé comprend en outre l'étape suivante :
iii) la séparation du produit obtenu à l'étape ii) au moyen de :
extraction avec des solvants ;
ou
filtration suivie de lavage avec des solvants du produit obtenu à l'étape ii) ;
ou
centrifugation du produit obtenu à l'étape ii) et lavage avec un solvant sélectionné dans le groupe se composant de : eau, glycols, alcools, cétones ;
ou
injection sous pression ;
ou
évaporation de la solution d'agents exfoliants de l'étape ii) .

7. Procédé selon une ou plusieurs des revendications précédentes, dans lequel ledit procédé comprend en outre les étapes suivantes :
a) le chauffage du produit obtenu à l'étape ii) dans une plage comprise entre 10 et 250°C ;
b) la décantation dudit produit chauffé pendant une durée comprise entre 0 et 72 heures ;
c) la séparation du matériau de graphène décanté de la solution obtenue à l'étape b).

8. Matériau à base de carbone nanostructuré obtenu avec le procédé selon l'une des revendications précédentes.

9. Utilisation du matériau à base de carbone nanostructuré selon la revendication 8 pour produire des encres conductrices, des films conducteurs, des additifs pour matières plastiques, des capteurs pour détecter des substances chimiques à la fois dans un gaz et dans un liquide, des transistors, des diodes, des modulateurs optiques, des matériaux conducteurs transparents, des cellules solaires, des batteries, des ultracondensateurs, un support pour ingrédients actifs médicaux ou biomédicaux, un antibactérien, un support capable de différentier la croissance moléculaire de certaines cellules, des revêtements protecteurs, des dispositifs électroniques souples, des composites ou des charges pour composites.
